# EUROPÄISCHE PATENTSCHRIFT

(11) **EP 2 772 023 B1**
(45) Veröffentlichungstag und Bekanntmachung des Hinweises auf die Patenterteilung: **30.12.2015**
(21) Anmeldenummer: 12783873.8
(22) Anmeldetag: 09.10.2012
(51) Int. Cl.: H04L 12/40, G06F 9/455, H04L 12/12, H04L 29/08, H04L 29/06

(54) **SLAVE-STEUERGERÄT UND VERFAHREN ZUR PROGRAMMIERUNG EINES SLAVE-STEUERGERÄTS**
SLAVE CONTROL DEVICE AND METHOD FOR PROGRAMMING A SLAVE CONTROL DEVICE
UNITÉ DE COMMANDE ESCLAVE ET PROCÉDÉ DE PROGRAMMATION D'UNE UNITÉ DE COMMANDE ESCLAVE

(30) Priorität: 27.10.2011 DE 102011117083
(43) Veröffentlichungstag der Anmeldung: 03.09.2014
(73) Patentinhaber: Volkswagen Aktiengesellschaft, 38440 Wolfsburg (DE)
(72) Erfinder: ODENBREIT, Florian, 38442 Wolfsburg (DE)
(86) Internationale Anmeldenummer: PCT/EP2012/004228
(87) Internationale Veröffentlichungsnummer: WO 2013/060419

(56) Entgegenhaltungen:
- WO-A1-97/29563
- WO-A2-03/039098
- DE-A1-102010 030 811

## Beschreibung

Die Erfindung betrifft ein Slave-Steuergerät und ein Verfahren zur Programmierung eines Slave-Steuergeräts.

Bei Bussystemen wird allgemein zwischen Master-Slave-Bussystemen und Multimaster-Bussystemen unterschieden. Dabei ist die Zuordnung bei einem Master-Slave-Bussystem fest, d.h. es gibt einen Master und einen oder mehrere Slaves. In einem Multimaster-Bussystem kann hingegen jedes Steuergerät zu einem Zeitpunkt Master oder Slave sein, d.h. die Zuordnung ist nicht fest.

In einem Kraftfahrzeug werden zur kostengünstigen Kommunikation von intelligenten Sensoren und Aktuatoren, wie z.B. für die Vernetzung innerhalb einer Tür oder eines Sitzes, geeignete Bussysteme benötigt. Ein solches kostengünstiges Bussystem ist beispielsweise der LIN-Bus. LIN steht für Local Interconnect Network. Ein LIN-Bussystem setzt sich aus einem LIN-Master und einem oder mehreren LIN-Slaves zusammen, die Netzknoten in dem Bussystem darstellen. Der LIN-Master hat Kenntnis über die zeitliche Reihenfolge aller zu übertragenden Daten und übernimmt deshalb die Steuerung. Die Daten werden von einem LIN-Slave dann übertragen, wenn dieser dazu von dem LIN-Master aufgefordert wird. Die Aufforderung erfolgt über das Aussenden einer LIN-Botschaft, in deren Header eine bestimmte Nachrichtenadresse enthalten ist. Zu jedem Zeitpunkt wird immer nur eine LIN-Botschaft übertragen. Dadurch ist kein Mechanismus zur Auflösung von Buskollisionen erforderlich, da es nicht möglich ist, dass in einem LIN-Bussystem Kollisionen entstehen. Die zeitliche Reihenfolge der LIN-Botschaften ist in einer so genannten Schedule-Tabelle, d.h. einem Zeitplan, festgehalten, die je nach Bedarf gewechselt werden kann.

Das WO9729563A1 offenbart eine Systemsteuerung zum Identifizieren eines Protokolls anhand von speziellen Datenfeldern welche für ein bestimmtes Protokoll charakteristisch sind. Wenn eine bestimmtes Protokoll erkannt wurde, lädt die Systemsteuerung ein Softwaremodul um das entsprechende Protokollfunktion zu implementieren und um eine Datenverbindung über das Netzwerk herzustellen.

Ein LIN-Bus ist also ein Master-Slave-Bussystem, wohingegen ein CAN-Bus (Controlled Area Network) ein Multimaster-Bussystem ist.

Aus der DE 10 2007 054 810 A1 ist ein Verfahren zum Erkennen unterschiedlicher Kommunikationsprotokolle in einem Steuergerät bekannt, das über mindestens zwei Kommunikationstreiber verfügt, wobei in dem Steuergerät überprüft wird, ob empfangene Daten zu einem Kommunikationsprotokoll passen, das einem von den mindestens zwei Kommunikationstreibern ausgewählten Kommunikationstreiber zugeordnet ist, um auf diese Weise eine gültige oder fehlerhafte Kommunikation zu erkennen. Somit kann ein Steuergerät bedarfsweise mit einem LIN-Protokoll oder einem K-Leitung-Protokoll betrieben werden. Die automatische Erkennung des Protokolls führt zu einer geringen Variantenvielfalt und damit zu finanziellen Einsparungen, da ein Produkt mit einer Typteilenummer in verschiedenen Fahrzeugtypen verwendet werden kann. Dabei ermöglicht das Verfahren, dass sowohl verschiedene Busarten, wie beispielsweise K-Line, LIN usw., als auch verschiedene Baudraten oder andere bustypische Parameter erkannt werden können.

Auch bei Verwendung des gleichen Kommunikationsprotokolls sind Anwendungen möglich, wo ein Slave-Steuergerät mit verschiedenen Mastern zusammen eingesetzt werden soll. Auch hier stellt sich das Problem, die Variantenvielfachheit zu reduzieren.

Der Erfindung liegt das technische Problem zugrunde, ein Slave-Steuergerät sowie ein Verfahren zur Programmierung eines Slave-Steuergeräts zur Verfügung zu stellen, mittels derer mit einfachen Mitteln das Slave-Steuergerät an verschiedene Master angepasst werden kann.

Die Lösung des technischen Problems ergibt sich durch die Gegenstände mit den Merkmalen der Ansprüche 1 und 5. Weitere vorteilhafte Ausgestaltungen der Erfindung ergeben sich aus den Unteransprüchen.

Das Slave-Steuergerät zum Einsatz in einem Master-Slave-Bussystem ist dabei derart ausgebildet, dass in dem Slave-Steuergerät mindestens zwei Programme abgelegt sind, wobei die Programme auf unterschiedliche Master abgestimmt sind, die sich in ihren Schedule-Tabellen unterscheiden, wobei in dem Slave-Steuergerät mindestens ein Unterscheidungsmerkmal der Schedule-Tabelle abgelegt ist, wobei in Abhängigkeit des Unterscheidungsmerkmals der jeweils angeschlossene Master erfasst und das zugeordnete Programm in einen Programmspeicher geladen wird oder geladen bleibt. Somit ist das Slave-Steuergerät in der Lage, seine Systemumgebung zu erfassen und sich selbständig an die erfasste Systemumgebung bzw. den dazugehörigen Master anzupassen. Somit entfallen auch Codierungsschritte, um beispielsweise mittels einer Kennung eine Software-Variante auszuwählen. Derartige Codierungen sind je nach Ausgestaltung zwar ein Fortschritt gegenüber dem Bereitstellen aller Varianten, müssen jedoch häufig nachgepflegt werden, wenn Modifizierungen in den Typenbezeichnungen vorgenommen werden. All dies wird erfindungsgemäß vermieden. Das Unterscheidungsmerkmal kann z.B. eine in der Schedule-Tabelle verwendete Botschaft sein, die nur bei dem einen Master auftritt. Das Unterscheidungsmerkmal kann aber beispielsweise auch die Reihenfolge oder der Zeitabstand der Botschaften des Masters sein. Existieren mehrere Unterscheidungsmerkmale, so wird vorzugsweise mehr als ein Unterscheidungsmerkmal ausgewertet, beispielsweise alle Unterscheidungsmerkmale. Das oder die Unterscheidungsmerkmale können einzeln im Slave-Steuergerät abgelegt sein oder aber die kompletten Schedule-Tabellen sind abgelegt, wobei sich durch Vergleich mit der empfangenen Schedule der Master bestimmen lässt, der aktuell mit dem Slave-Steuergerät verbunden ist. Vorzugsweise ist der Programmspeicher als EEPROM ausgebildet.

In einer Ausführungsform ist das Slave-Steuergerät ein LIN-Slave-Steuergerät, d.h. Master und Slave-Steuergerät kommunizieren mittels des LIN-Protokolls.

In einer weiteren Ausführungsform ist in dem Programmspeicher eines der Programme als Default-Programm gespeichert. Dieses Default-Programm ist vorzugsweise das Programm des am meisten verwendeten Masters, so dass die Umprogrammierungen des Programmspeichers im Mittel reduziert werden.

In einer weiteren Ausführungsform wird das geladene bzw. im Programmspeicher verbleibende Programm nach Erfassung des zugeordneten Masters persistent, d.h. nicht flüchtig, gespeichert. Somit wird vermieden, dass das Slave-Steuergerät sich bei jedem Neu-Start erst wieder anlernen muss. Dies setzt jedoch voraus, dass sich die Umgebung nicht ändert, was jedoch üblicherweise angenommen werden kann.

In einer weiteren Ausführungsform wartet das Slave-Steuergerät mindestens einen Durchlauf einer Schedule-Tabelle ab, bevor das jeweilige Programm geladen wird bzw. geladen bleibt. Die Zeit für einen Durchlauf liegt dabei typischerweise unter einer zulässigen Aufstartzeit eines Slave-Steuergeräts, insbesondere eines LIN-Slave-Steuergeräts, so dass bereits im ersten Wach-Zyklus des Slave-Steuergeräts mit korrekter Funktion von Beginn an gerechnet werden kann. Spielt die korrekte Funktion in den ersten Sekunden des ersten Wach-Zyklus des Slave-Steuergeräts keine große Rolle, kann aus Robustheitsgründen der Erkennungszeitraum auf einige Sekunden ausgedehnt werden.

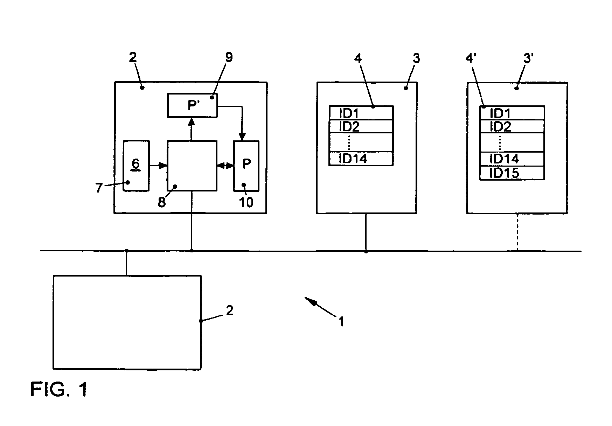

Die Erfindung wird nachfolgend anhand eines bevorzugten Ausführungsbeispiels näher erläutert. Die einzige Figur zeigt ein schematisches Blockschaltbild eines LIN-Bussystems.

Das LIN-Bussystem 1 umfasst mehrere Slave-Steuergeräte 2, wobei ein Slave-Steuergerät 2 etwas detaillierter dargestellt ist. An das LIN-Bussystem 1 können alternativ unterschiedliche Master 3, 3' angeschlossen werden, wobei im dargestellten Beispiel der Master 3 angeschlossen ist, weshalb bei dem Master 3' die Verbindung gestrichelt dargestellt ist. Jedem der Master 3, 3' ist eine Schedule-Tabelle 4, 4' zugeordnet, die einem Ablaufplan der verwendeten Botschaften entspricht. Im dargestellten Beispiel unterscheiden sich die Schedule-Tabelle 4 und 4' dadurch, dass in der Schedule-Tabelle 4' noch eine Botschaft ID15 auftritt.

Dieses Unterscheidungsmerkmal 6 ist vorab bekannt und in mindestens einem Slave-Steuergerät 2 in einem Speicher 7 abgelegt. Das Slave-Steuergerät 2 weist darüber hinaus einen Prozessor 8, einen weiteren Speicher 9 und einen Programmspeicher 10 auf. In dem Slave-Steuergerät 2 sind abgestimmte Programme P, P' für die Master 3, 3' abgelegt, wobei das Programm P dem Master 3 und das Programm P' dem Master 3' zugeordnet ist. Das Programm P ist dabei als Default-Programm im Programmspeicher 10 abgelegt, der beispielsweise als EEPROM ausgebildet ist. Das Programm P' ist hingegen im Speicher 9 abgelegt.

Wird nun das LIN-Bussystem 1 aufgebaut, so weiß das Slave-Steuergerät 2 zunächst nicht, welcher Master 3 oder 3' verbaut ist. Nach dem Hochfahren beginnt der Master 3 seine Schedule-Tabelle abzuarbeiten und beginnt Botschaften zu senden. Das Slave-Steuergerät 2 hört nun den Busverkehr ab. Der Prozessor 8 überprüft den Busverkehr auf das Vorhandensein des Unterscheidungsmerkmals 6. Je nachdem, ob eine Botschaft ID15 erkannt wurde, erkennt das Slave-Steuergerät 2, ob ein Master 3 oder ein Master 3' angeschlossen ist. Vorliegend erfasst das Slave-Steuergerät 2 nach einem vollen Schedule-Durchlauf keine ID15, so dass daraus das Vorhandensein eines Master 3 abgeleitet wird. Das Slave-Steuergerät 2 wählt dann das zugeordnete Programm P aus, was bereits als Default-Programm im Programmspeicher 10 ist. Daher ist keinerlei weitere Anpassung vorzunehmen.

Hätte hingegen das Slave-Steuergerät 2 einen Master 3' erfasst, so hätte dieses das Programm P' aus dem Speicher 9 in den Programmspeicher 10 geladen. Somit erkennt das Slave-Steuergerät 2 selbstständig seine Umgebung und passt sich selbst automatisch an.

Dabei sei angemerkt, dass nicht alle Slave-Steuergeräte 2 des LIN-Bussystems 1 erfindungsgemäß ausgebildet sein müssen. Der Speicher 7 mit dem oder den Unterscheidungsmerkmalen 6 kann dabei auch in den Speicher 9 oder in den Prozessor 8 oder in den Programmspeicher 10 integriert werden.

## Patentansprüche

1. Slave-Steuergerät (2) zum Einsatz in einem Master-Slave-Bussystem, wobei
in dem Slave-Steuergerät (2) mindestens zwei Programme (P, P') abgelegt sind, **dadurch gekennzeichnet, dass** die Programme (P, P') auf unterschiedliche Master (3, 3') abgestimmt sind, die sich in ihren Schedule-Tabellen (4, 4') unterscheiden, wobei in dem Slave-Steuergerät (2) mindestens ein Unterscheidungsmerkmal (6) der Schedule-Tabellen (4, 4') abgelegt ist, wobei in Abhängigkeit des Unterscheidungsmerkmals (6) der jeweils angeschlossene Master (3, 3') erfasst und das zugeordnete Programm (P, P') in einen Programmspeicher (10) geladen wird oder geladen bleibt.

2. Slave-Steuergerät nach Anspruch 1, **dadurch gekennzeichnet, dass** das Slave-Steuergerät (2) ein LIN-Slave-Steuergerät ist.

3. Slave-Steuergerät nach Anspruch 1 oder 2, **dadurch gekennzeichnet, dass** in dem Programmspeicher (10) eines der Programme (P, P') als Default-Programm gespeichert ist.

4. Slave-Steuergerät nach einem der vorangegangenen Ansprüche, **dadurch gekennzeichnet, dass** das geladene Programm (P, P') persistent gespeichert ist.

5. Verfahren zur Programmierung eines Slave-Steuergeräts (2) zum Einsatz in einem Master-Slave-Bussystem, wobei
in dem Slave-Steuergerät (2) mindestens zwei Programme (P, P') abgelegt sind, **dadurch gekennzeichnet, dass** die Programme (P, P') auf unterschiedliche Master (3, 3') abgestimmt sind, die sich in ihren Schedule-Tabellen (4, 4') unterscheiden, wobei in dem Slave-Steuergerät (2) mindestens ein Unterscheidungsmerkmal (6) der Schedule-Tabellen (4, 4') abgelegt ist, wobei in Abhängigkeit des Unterscheidungsmerkmals (6) der jeweils angeschlossene Master (3, 3') erfasst und das zugeordnete Programm (P, P') in einen Programmspeicher (10) geladen wird oder geladen bleibt.

6. Verfahren nach Anspruch 5, **dadurch gekennzeichnet, dass** der Master (3, 3') und das Slave-Steuergerät (2) mittels des LIN-Protokolls kommunizieren.

7. Verfahren nach Anspruch 5 oder 6, **dadurch gekennzeichnet, dass** in dem Programmspeicher (10) eines der Programme (P, P') als Default-Programm gespeichert ist.

8. Verfahren nach einem der Ansprüche 5 bis 7, **dadurch gekennzeichnet, dass** das geladene Programm (P, P') persistent gespeichert wird.

9. Verfahren nach einem der Ansprüche 5 bis 8, **dadurch gekennzeichnet, dass** das Slave-Steuergerät (2) mindestens einen Durchlauf einer Schedule-Tabelle (4, 4') abwartet, bevor das jeweilige Programm (P, P) geladen wird.

## Claims

1. Slave control device (2) for use in a master/slave bus system, wherein at least two programs (P, P') are stored in the slave control device (2), **characterized in that** the programs (P, P') are matched to different masters (3, 3') which differ in terms of their schedule tables (4, 4'), at least one distinguishing feature (6) of the schedule tables (4, 4') being stored in the slave control device (2), the respectively connected master (3, 3') being detected on the basis of the distinguishing feature (6) and the associated program (P, P') being loaded into a program memory (10) or remaining loaded.

2. Slave control device according to Claim 1, **characterized in that** the slave control device (2) is a LIN slave control device.

3. Slave control device according to Claim 1 or 2, **characterized in that** one of the programs (P, P') is stored as a default program in the program memory (10).

4. Slave control device according to one of the preceding claims, **characterized in that** the loaded program (P, P') is stored persistently.

5. Method for programming a slave control device (2) for use in a master/slave bus system, wherein at least two programs (P, P') are stored in the slave control device (2), **characterized in that** the programs (P, P') are matched to different masters (3, 3') which differ in terms of their schedule tables (4, 4'), at least one distinguishing feature (6) of the schedule tables (4, 4') being stored in the slave control device (2), the respectively connected master (3, 3') being detected on the basis of the distinguishing feature (6) and the associated program (P, P') being loaded into a program memory (10) or remaining loaded.

6. Method according to Claim 5, **characterized in that** the master (3, 3') and the slave control device (2) communicate using the LIN protocol.

7. Method according to Claim 5 or 6, **characterized in that** one of the programs (P, P') is stored as a default program in the program memory (10).

8. Method according to one of Claims 5 to 7, **characterized in that** the loaded program (P, P') is stored persistently.

9. Method according to one of Claims 5 to 8, **characterized in that** the slave control device (2) waits for at least one run through a schedule table (4, 4') before the respective program (P, P') is loaded.

## Revendications

1. Dispositif de commande esclave (2) destiné à être mis en oeuvre dans un système de bus de type maître-esclave, dans lequel au moins deux programmes (P, P') sont stockés dans l'appareil de commande esclave (2),
**caractérisé en ce que** les programmes (P, P') sont appariés avec des maîtres (3, 3') différents qui se différencient par leurs tables de planification (4, 4'), dans lequel au moins une caractéristique de différentiation (6) des tables de planification (4, 4') est stockée dans l'appareil de commande esclave (2), dans lequel le maître (3, 3') respectivement connecté est détecté en fonction de la caractéristique de différentiation (6) et le programme associé (P, P') est chargé ou reste chargé dans la mémoire de programme (10).

2. Appareil de commande esclave selon la revendication 1, **caractérisé en ce que** l'appareil de commande esclave (2) est un appareil de commande esclave de type LIN.

3. Appareil de commande esclave selon la revendication 1 ou 2, **caractérisé en ce que** l'un des programmes (P, P') est stocké en tant que programme par défaut dans la mémoire de programme (10).

4. Appareil de commande esclave selon l'une quelconque des revendications précédentes, **caractérisé en ce que** le programme chargé (P, P') est stocké de manière persistante.

5. Procédé de programmation d'un appareil de commande esclave (2) destiné à être mis en oeuvre dans un système de bus de type maître-esclave, dans lequel au moins deux programmes (P, P') sont stockés dans l'appareil de commande esclave (2),
**caractérisé en ce que** les programmes (P, P') sont appariés avec des maîtres (3, 3') différents qui se différencient par leurs tables de planification (4, 4'), dans lequel au moins une caractéristique de différentiation (6) des tables de planification (4, 4') est stockée dans l'appareil de commande esclave (2), dans lequel le maître (3, 3') respectivement connecté est détecté en fonction de la caractéristique de différentiation (6) et le programme associé (P, P') est chargé ou reste chargé dans la mémoire de programme (10).

6. Procédé selon la revendication 5, **caractérisé en ce que** le maître (3, 3') et l'appareil de commande esclave (2) communiquent par l'intermédiaire du protocole LIN.

7. Procédé selon la revendication 5 ou 6, **caractérisé en ce que** l'un des programmes (P, P') est stocké en tant que programme par défaut dans la mémoire de programme (10).

8. Procédé selon l'une quelconque des revendications 5 à 7, **caractérisé en ce que** le programme chargé (P, P') est stocké de manière persistante.

9. Procédé selon l'une quelconque des revendications 5 à 8, **caractérisé en ce que** l'appareil de commande esclave (2) attend l'écoulement d'au moins une table de planification (4, 4') avant que le programme respectif (P, P') soit chargé.
